# FASCICULE DE BREVET EUROPEEN

(11) **EP 0 330 581 B1**
(45) Date de publication et mention de la délivrance du brevet: **28.04.1993**
(21) Numéro de dépôt: 89400518.0
(22) Date de dépôt: 23.02.1989
(51) Int. Cl.: H02J 9/06, H02M 3/155

(54) **Procédé et dispositif pour alimenter une installation électrique et son application aux lampes d'éclairage**
Verfahren und Vorrichtung zur Speisung einer Elektroinstallation und ihre Anwendung bei Lampen
Method and device for feeding an electrical installation , and its use in lamps

(30) Priorité: 26.02.1988 FR 8802425
(43) Date de publication de la demande: 30.08.1989
(73) Titulaire: ELECTRICITE DE FRANCE Service National, 75008 Paris (FR); INNOVER, CONSEILLER, PROMOUVOIR, F-11300 Limoux (FR)
(72) Inventeur: Corn, Christian, F-78370 Plaisir (FR); Boudan, Jacques Emile, F-13320 Bouc Bel Air (FR)
(74) Mandataire: Mestre, Jean (FR)

(56) Documents cités:
- EP-A- 0 078 722
- FR-A- 2 416 617
- FR-A- 2 601 202
- GB-A- 2 072 968

## Description

L'invention concerne la protection des installations électriques contre des perturbations du réseau ou secteur d'alimentation et, plus particulièrement, a pour objets un procédé et un dispositif pour alimenter une installation électrique en s'affranchissant des anomalies telles des sautes et des coupures de tension relativement brèves du réseau de distribution électrique ainsi que leur application aux lampes d'éclairage à vapeurs métalliques sous haute pression notamment.

Les installations alimentées par le réseau de distribution électrique comprennent, souvent, des appareils et/ou des équipements qui sont très sensibles aux sautes de tension ou aux coupures relativement brèves de cette dernière. Ce type de perturbations qui se manifestent notamment sous la forme d'une baisse de tension ou de sa disparition, ne sont pas sans inconvénients pour certains de ces appareils et équipements qu'elles peuvent définitivement et irrémédiablement dégrader ou bien, simplement, mettre hors d'usage certains de leurs constituants par la perte d'informations, par exemple lorsqu'il s'agit de mémoires volatiles.

Pour pallier ce type d'inconvénients, il est habituel d'utiliser des systèmes de sécurité tels que des groupes électrogènes qui entraînent des alternateurs ou des génératrices ou bien des batteries tampons.

Dans le cas d'appareils ou d'équipements qui sont alimentés en tension continue on a déjà proposé d'utiliser les condensateurs de filtrage de la tension alternative redressée, dont on augmente les dimensions pour obtenir une certaine immunité. Toutefois, on observera que le dimensionnement d'un condensateur stockant une énergie suffisante pour immuniser des appareils consommant quelques dizaines de watts contre des coupures relativement brèves usuelles telles qu'elles se manifestent sur le réseau, par exemple des interruptions n'excédant pas la demi-seconde environ, crée un courant de charge, lors de le remise sous tension, qui n'est pas acceptable, en pratique, par les systèmes de protection normalement associés.

Ces perturbations du réseau ne sont pas sans présenter de graves inconvénients même en dehors du domaine technique de l'informatique. Par exemple, en matière d'éclairage public, urbain ou autoroutier, des coupures ou baisses de tension peuvent nuire grandement à la sécurité des usagers du fait d'une extinction soudaine de l'éclairage. Ceci est très important en particulier dans le cas où l'éclairage public est assuré à l'aide de lampes à décharges à vapeur de mercure ou à vapeur de sodium sous haute pression. Comme on le sait, lorsqu'une telle lampe s'éteint, elle ne peut se réamorcer qu'après une durée de plusieurs minutes nécessaire pour d'abord lui laisser le temps de se refroidir et ensuite, à la reprise de l'alimentation, d'atteindre sa luminosité maximale qui n'est acquise qu'après une période de fonctionnement d'une vingtaine de minutes.

Ce type d'inconvénients a aussi des répercussions pour le producteur et le distributeur d'énergie car au moment de la remise sous tension du réseau, l'appel de courant provoqué par la remise en marche simultanée de tous les appareils couplés au réseau est tel que les disjoncteurs peuvent avoir du mal à supporter l'intensité demandée.

L'invention a pour but de remédier à ces inconvénients, que ce soit pour l'usager ou le producteur et distributeur d'énergie électrique.

Il a déjà été proposé dans le document FR-A-26 012 02 d'utiliser un condensateur de stockage associé à un limiteur de courant de charge qui est constitué, entre autres, d'une self-inductance et d'un commutateur qui sont connectés en série avec le condensateur de stockage et d'une diode de retournement qui est connectée en parallèle sur le condensateur de stockage et la self-inductance. On agit alors sur le courant de charge du condensateur de stockage en modulant la durée de conduction du commutateur d'une manière réglable périodique.

Si on utilise un limiteur du type que l'on vient d'indiquer, le courant de charge du condensateur de stockage évolue en dents de scie dont le flanc ascendant de durée t correspond au courant de charge dans la self-inductance et dont le flanc descendant correspond à la décharge de la self-inductance dans le condensateur de stockage. Ce phénomène se reproduit avec une période T où la durée de charge du condensateur occupe habituellement les deux tiers environ de celle-ci.

La tension U aux bornes de la diode de retournement, représentative de celle du réseau, est égale à la somme de la tension U_{L} aux bornes de a self-inductance et de la tension U_{C} au bornes du condensateur de stockage. Le courant de crète I_{C} dans le condensateur de stockage est alors égal à I_{C}=U_{L} x t/L où L est la valeur de la self-inductance.

Dans ces conditions, pour que le courant I_{C} soit défini, il faut que la self-inductance ait perdu son énergie pendant le retournement. Au retournement U_{L} = - U_{C}.

On comprend donc que si la tension U_{C} aux bornes du condensateur de stockage est nulle ou trop petite, la self-inductance ne se déchargera pas et le courant dans le condensateur de stockage sera alors cummulatif.

Le courant qui circulerait alors dans la diode de retournement aurait une tendance ascendante en forme de dents de scie inclinées comprenant une succession d'un grand flanc ascendant suivi d'un petit flanc descendant puis à nouveau un grand flanc ascendant suivi d'un autre petit flanc descendant, et ainsi de suite. Ce phénomène étant cummulatif, comme indiqué, on voit qu'il y a risque de destruction du commutateur.

A partir de ces observations on peut établir le système d'équations qui règit l'état de sécurité limite de fonctionnement.

A la charge de la self-inductance on a I_{C} = U_{L} x t/L = (U - U_{C}) x t/Z où Z est l'impédance du circuit.

A la décharge de la self-inductance on a I_{C}=U_{C}x(T-t)/Z.

De ces équations on tire immédiatement la relation t/T=U_{C}/U.

On voit que si le condensateur de stockage est déchargé, ce qui se produit à la mise en service initiale ou après une anomalie très importante du réseau, on a U_{c}=0 ; c'est-à-dire que la durée de charge t est nulle. Il est donc alors impossible de faire démarrer le processus en toute sécurité sur un condensateur déchargé. Le démarrage éventuel du processus aura lieu avec de grands risques puisque la totalité de l'énergie sera absorbée par le commutateur, ce qui est pratiquement impensable si la capacité du condensateur de stockage est importante.

Il existe aussi d'autres cas de fonctionnement où les risques sont importants.

Par exemple en régime permanent si la tension du réseau baisse et est faible, on voit qu'il faut une durée de conduction t relativement grande. Ainsi, dans ces conditions, si survient un à-coup positif de tension du réseau, U croit brusquement et le courant de charge I_{C} sort des limites de sécurité et diverge en provoquant la destruction du commutateur. Il faut donc disposer d'une solution qui permette de s'affranchir de ce genre de difficultés.

Ce sont ces types d'inconvénients que visent à résoudre notamment le procédé et le dispositif objets de l'invention.

L'invention a pour objet un procédé pour alimenter une installation électrique en s'affranchissant des anomalies telles des sautes ou coupures de tension relativement brèves du réseau de distribution électrique en faisant en sorte que l'on n'alimente jamais l'utilisation directement par ce réseau mais à l'aide d'un condensateur de stockage intercalé entre réseau et installation. Pour mettre en oeuvre ce procédé on utilise au moins un condensateur de stockage que l'on associe à un limiteur de courant de charge de ce condensateur qui est constitué, entre autres, d'une self-inductance et d'un commutateur qui sont connectés en série avec le condensateur de stockage et d'une diode de retournement qui est connectée en parallèle sur le condensateur de stockage et la self-inductance et on agit sur le courant de charge du condensateur de stockage en modulant la durée de conduction du commutateur d'une manière réglable périodique.

Selon le procédé de l'invention on utilise un régulateur / contrôleur pour commander le commutateur de manière que soit, selon un mode transitoire, on assigne une loi d'évolution déterminée au courant de charge du condensateur de stockage pour lui faire atteindre une charge au moins égale à une valeur de service à partir d'une valeur assignée soit, selon un mode permanent, on surveille la tension du condensateur de stockage pour la maintenir au voisinage d'un seuil déterminé indépendamment de la tension du réseau et on utilise un programmateur qui pilote le régulateur / contrôleur à l'aide d'une valeur de consigne pour que cette loi soit une croissance graduelle compatible avec les aptitudes du réseau et du commutateur, on temporise l'utilisation de la valeur de consigne pour que cette loi de croissance graduelle ne soit appliquée que lorsque le condensateur de stockage a atteint une précharge minimale fixée au moins égale à cette valeur assignée après une mise en service initiale ou une reprise de fonctionnement normal à la suite d'une anomalie, on permute pour faire basculer le régulateur / contrôleur de son mode transitoire à son mode permanent en agissant sur la valeur de consigne lorsque la charge du condensateur de stockage a atteint une valeur de service fixée pour la maintenir au voisinage du seuil déterminé et on fait démarrer le fonctionnement du régulateur / contrôleur lors d'une mise en service initiale ou d'une reprise de fonctionnement normal à la suite d'une anomalie alors que la charge du condensateur de stockage est pratiquement nulle.

L'invention a aussi pour objet un dispositif pour alimenter une installation électrique en s'affranchissant des anomalies telles des sautes ou coupures de tension relativement brèves du réseau de distribution électrique, qui est intercalé en permanence entre réseau et installation et qui comprend au moins un condensateur de stockage et un limiteur de courant de charge du condensateur qui est constitué, entre autres, d'une self-inductance et d'un commutateur qui sont connectés en série avec le condensateur de stockage et d'une diode de retournement qui est connectée en parallèle sur le condensateur de stockage et la self-inductance, et qui agit sur le courant de charge du condensateur de stockage en modulant la durée de conduction du commutateur d'une manière réglable périodique.

Ce dispositif est caractérisé en ce qu'il comprend aussi un régulateur / contrôleur commandant le commutateur pour soit, selon un mode transitoire, assigner une loi d'évolution déterminée au courant de charge du condensateur de stockage pour lui faire atteindre une charge au moins égale à une valeur de service à partir d'une valeur assignée soit, selon un mode permanent, pour surveiller la tension du condensateur de stockage lorsqu'elle a atteint une valeur de service afin de la maintenir au voisinage d'un seuil déterminé indépendamment de la tension du réseau, un programmateur avec un pilote pour opérer sur le régulateur / contrôleur à l'aide d'une valeur de consigne pour que cette loi d'évolution soit une croissance graduelle compatible avec les aptitudes du réseau et du commutateur, un temporisateur agissant sur la valeur de consigne pour que cette loi de croissance graduelle ne soit appliquée que lorsque le condensateur de stockage a atteint une précharge minimale fixée au moins égale à cette valeur assignée après une mise en service initiale ou une reprise de fonctionnement normal à la suite d'une anomalie, un permutateur pour faire basculer le régulateur / contrôleur de son mode transitoire à son mode permanent en agissant sur la valeur de consigne lorsque la charge du condensateur de stockage a atteint une valeur de service fixée pour la maintenir au voisinage de ce seuil déterminé et un démarreur pour lancer le fonctionnement du régulateur / contrôleur lors d'une mise en service initiale ou d'une reprise de fonctionnement normal à la suite d'une anomalie alors que la charge du condensateur de stockage est pratiquement nulle.

Le procédé et le dispositif suivant l'invention sont tels que l'installation utilisatrice n'est jamais alimentée directement par le réseau ou secteur de distribution électrique mais toujours au travers d'un condensateur de stockage dont la tension est maintenue pratiquement indépendante des fluctuations de la tension du réseau et dont le courant de charge est toujours maintenu dans les limites de sécurité que le réseau ainsi que les composants du dispositif selon l'invention sont susceptibles de supporter. Pour ce faire on opère avec une loi déterminée qui est mise en oeuvre suivant une programmation non-bouclée après une phase de démarrage pour agir sur le courant de charge du condensateur de stockage lors de la constitution ou de la reconstitution de son stock afin de lui donner une valeur de service et qui est utilisée d'une manière telle que, lorsqu'après une période de préchargement initial, la tension aux bornes du condensateur de stockage est égale à la valeur de service on assure non plus la régulation de la charge du condensateur de stockage mais la surveillance ou le contrôle de l'entretien de celle-ci au voisinage d'un seuil déterminé.

Le dispositif suivant l'invention est destiné à absorber des baisses de tension du réseau jusqu'à moins vingt pour cent environ de la tension nominale et des montées lentes en tension sans limitation de valeur autre que celles imposées pour les performances des composants, supérieures aux valeurs maximales contractuellement admises.

Si toutefois une perturbation conduit la tension du réseau en-dessous de la valeur fixée pendant plus de 40 ms environ, ou qu'il se produit un à-coups brutal de tension dont l'accroissement est supérieur à vingt pour cent en moins de 4 s environ, l'invention est telle que le dispositif de régulation cesse son action et que le programme de rétablissement s'effectue comme lors d'une mise sous tension.

L'invention vise aussi l'application de cette technique à l'alimentation de lampes d'éclairage à vapeurs métalliques sous haute pression.

D'autres caractéristiques de l'invention apparaîtront à la lecture de la description et des revendications qui suivent et à l'examen du dessin annexé, donné seulement à titre d'exemple, où :
- la Fig.1 est un organigramme illustrant de manière schématique l'architecture fonctionnelle d'un dispositif suivant l'invention associé à ses annexes;
- la Fig.2 est un schéma de l'étage de puissance du régulateur / contrôleur d'un dispositif selon l'invention ;
- la Fig.3A est un schéma du circuit du programmateur d'un dispositif selon l'invention ;
- la Fig.3B illustre l'évolution, au cours du temps, de la tension U_{c} aux bornes du condensateur de stockage et indique la valeur assignée U_{A} au-dessus de laquelle commence le programme de chargement du condensateur de stockage et la valeur de service Uₛ ou valeur de consigne correspondant à une valeur donnée de la tension aux bornes du condensateur de stockage donc de la tension d'utilisation en régime permanent, qui contribuent à délimiter le mode transitoire TR et le mode permanent P qui succèdent à la phase de démarrage D ;
- la Fig.4A est un schéma notamment du circuit de détection des ruptures de charge d'un dispositif suivant l'invention ;
- la Fig.4B illustre la progression des signaux de conduction ;
- la Fig.5 est un schéma du circuit de rdressement et du circuit du démarreur du programmateur d'un dispositif suivant l'invention ;
- la Fig.6 est un schéma du circuit des sécurités d'un dispositif selon l'invention ;
- la Fig.7 est un schéma des circuits des accessoires d'un dispositif selon l'invention ;
- la Fig.8A est un schéma du circuit de l'oscillateur d'un dispositif selon l'invention ;
- la Fig.8B illustre la succession des ordres de basculement de certains des composants des circuits de la Fig.8A ; et
- la Fig.9 est un schéma des circuits des auxilliaires d'un dispositif selon l'invention.

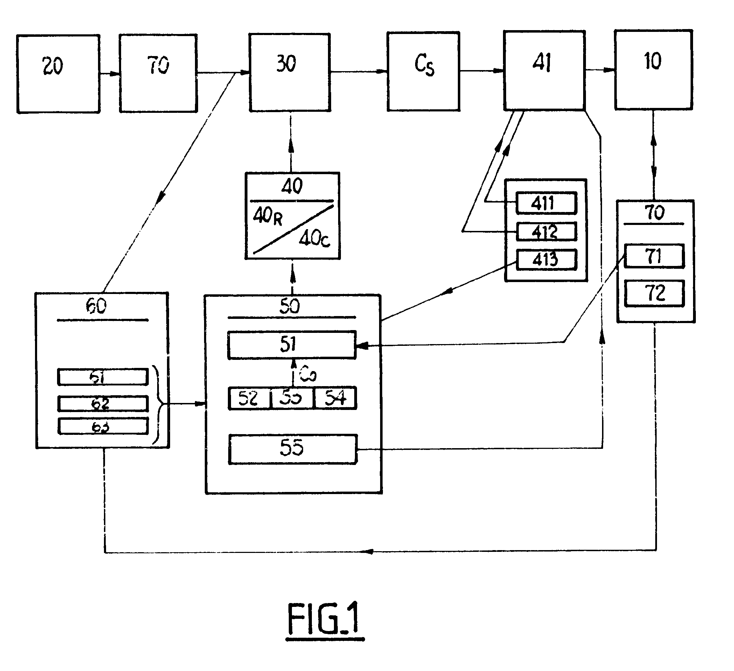

Comme on le voit en se reportant à l'organigramme de la Fig.1, une installation électrique 10 est alimentée à l'aide d'un réseau 20 ou secteur de distribution électrique toujours à travers au moins un condensateur de stockage C_{S}. La charge du condensateur de stockage C_{S} est assurée à l'aide d'un limiteur de son courant de charge 30.

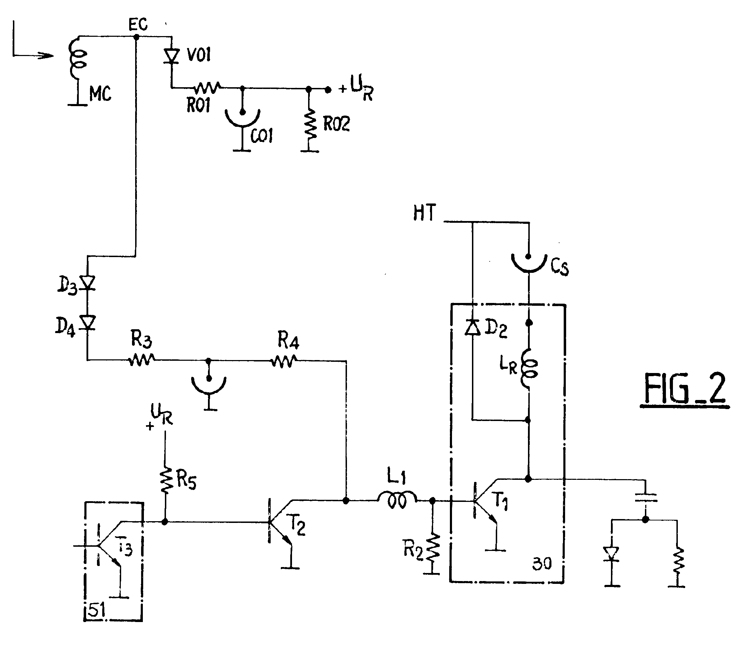

Comme on le verra par la suite, le limiteur de courant de charge 30 du condensateur de stockage C_{S} comprend une self-inductance L_{R} et un commutateur T₁, par exemple un transistor, qui sont connectés en série avec ce condensateur et une diode de retournement D₂ qui est connectée en parallèle sur le condensateur de stockage et la self-inductance. Ceci est représenté en particulier sur la Fig.2.

L'invention porte notamment sur la commande de ce commutateur.

Comme on le voit à l'examen de la Fig.1, un dispositif selon l'invention comprend une entité 40 jouant le rôle de régulateur 40_{R} - contrôleur 40_{C} sous la dépendance d'un programmateur 50.

Le programmateur 50 comprend un pilote 51 qui opère en fonction d'une valeur de consigne Co, représentée par exemple par une tension, sous la dépendance d'un élaborateur 52 d'une loi d'évolution, d'un temporisateur 53, d'un permutateur 54. Ce programmateur comprend aussi un démarreur 55 sur lequel on reviendra par la suite.

Comme on l'observe, le régulateur / contrôleur comprend aussi un oscillateur 41 avec son alimentation et ses accessoires qui assurent le départ de l'oscillateur à l'aide d'un lanceur 411 et qui facilitent son fonctionnement grâce à un circuit d'aide à la commutation 412 ; ces accessoires incorporent aussi une télécommande 413 de la consigne Cₒ. Pour la commodité de la compréhension et la facilité de l'illustration l'oscillateur 41 est séparé de l'entité 40 mais dans la pratique leurs circuits respectifs sont imbriqués. Il peut en être de même pour d'autres circuits, comme il est classique ; il s'agit là d'une affaire d'implantation.

A ceci sont aussi associées des sécurités 60 qui assurent l'observation du réseau. Ces sécurités comprennent un circuit pour la tension de démarrage 61, un circuit pour les creux de tension 62 et un circuit 63 contre les à-coups.

Des auxiliaires 70 sont aussi utilisés ; ils sont notamment adaptés à l'application visée par l'invention.

Ces auxiliaires comprennent, par exemple, un circuit de redressement-filtrage et doubleur de tension placé immédiatement à l'entrée du dispositif suivant l'invention, entre le réseau 20 et le limiteur 30, et des circuits qui concernent plus particulièrement l'installation 10 soit pour détecter une rupture de celle-ci (circuit 71) soit pour provoquer son amorçage (circuit 72) quant il s'agit d'installations faites, par exemple, de lampes d'éclairage à vapeur métallique sous haute tension.

On se reportera maintenant à la Fig.2 où on a illustré l'étage de puissance du régulateur / contrôleur suivant l'invention et, notamment, l'élaborateur 52 qui permet l'établissement de la loi de croissance progressive du courant de charge.

Ce type de schéma faisant appel à des composants classiques, discrets ou en circuits intégrés, on n'énumèrera que ceux qui ont un intérêt pour l'invention.

Comme on le voit sur cette figure, on a représenté le condensateur de stockage C_{S} auquel est associée en série la self-inductance L_{R} et aux bornes desquels se trouve connectée en parallèle la diode de retournement D₂. Le commutateur est ici un transistor T₁ monté comme il est illustré.

Le commutateur T₁ est commandé par le pilote 51 ici le transistor T₃ par l'intermédiaire d'un transistor T₂ dit "driver". Des diodes D₃ et D₄ servent à la polarisation du transistor T₁ et sont montées en série pour élever le seuil de débloquage du commutateur T₁ au-dessus de celui du transistor T₂; ceci évite en période transistoire de démarrage ou d'arrêt les débloquages intempestifs du commutateur T₁ lors de faibles valeurs de la tension alternative E_{C} aux bornes d'un enroulement auxiliaire du transformateur de l'oscillateur 41 sur lequel on reviendra par la suite.

La résistance R_{O1} sert à limiter le courant de crête et la résistance R_{O2} sert au vidage.

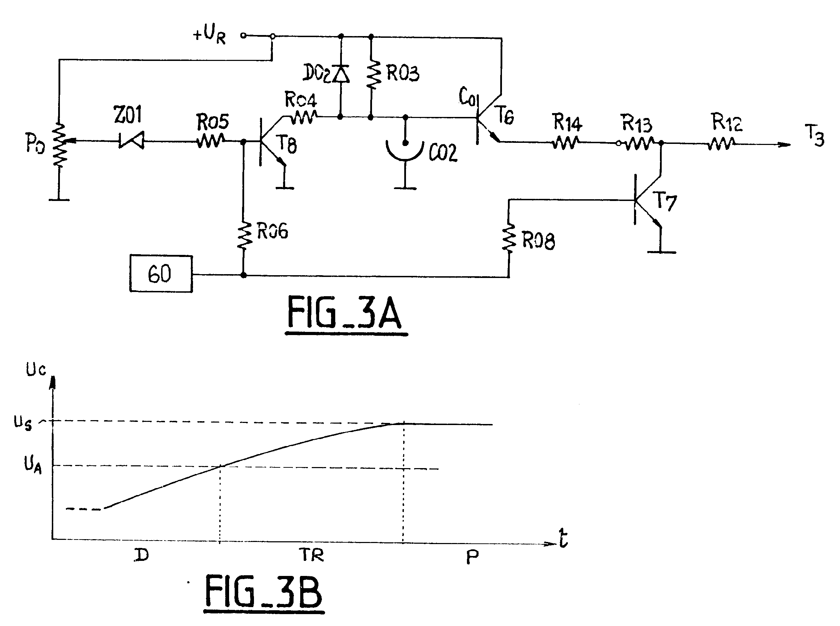

On se reportera maintenant à la Fig.3A où se trouvent illustrés des circuits du programmateur 50 selon l'invention. Ceux-ci permettent une application selon la loi élaborée, linéaire graduelle de la valeur de consigne C_{O} qui est utilisée pour la constitution du stock du condensateur de stockage C_{S} à la mise en service ou après une perturbation du réseau qui a déclenché une sécurité.

La loi d'évolution de la consigne C_{O} résulte de l'élaborateur 52 fait, entre autres, de la résistance R_{O3} et du condensateur C_{O2} ; l'ajustement est obtenu par le transistor T₈.

Le temporisateur 53 comprend des transistors T₃ et T₆.

Le permutateur 54 comprend l'association de la tension U_{R}, image de la tension aux bornes du condensateur de stockage C_{S}, de la tension au potentiomètre P_{O} et de la diode Zener Z_{O1} ainsi que la résistance R_{O5}.

On voit que lors de la mise sous tension, même après un arrêt bref, le condensateur C_{O2} ayant été déchargé au travers de la diode D_{O2} et de la résistance R_{O3} (la tension U_{R} étant pratiquement nulle) se charge graduellement au travers de la résistance R_{O3} à condition que le transistor T₈ soit bloqué. Cette durée de chargement est environ de 10 s.

Lorsque la tension aux bornes du condensateur de stockage C_{S} atteint sa valeur fixée par la consigne C_{O}, la tension U_{R}, qui est son image, atteint une valeur qui provoque la conduction de la diode Zenner Z_{O1}. Le transistor T₈ prend une valeur de conduction qui équilibre la charge du condensateur C_{O2}, atteignant ainsi le régime permanent.

Lors de la présence d'un signal des sécurités 60, le condensateur C_{O2} se décharge au travers de la résistance de limitation R_{O4} pendant une durée de quelques millisecondes. Pendant cette durée, le transistor T₈ est suppléé par le transistor T₇ qui assure la remise à zéro immédiate de la commande.

Les composants des circuits de la Fig.3A sont agencés de telle manière que lorsque le régulateur 40_{R} a fonctionné en mode transitoire TR pour la constitution ou reconstitution de la charge du condensateur de stockage dans les conditions prescrites, il assure ensuite, en permanence, la surveillance de la source de l'oscillateur 41 pour la maintenir à une valeur de consigne lorsque la tension du réseau varie entre des seuils déterminés fixés par les sécurités. On bascule alors en mode permanent P assuré par le controleur 40_{C} lorsque la diode Zenner Z_{O1} devient conductrice.

Ceci a pour conséquence de maintenir constante la puissance délivrée à l'installation 10 c'est-à-dire de maintenir constant l'éclairage lorsque cette installation est composée d'une ou de lampes d'éclairage à vapeurs métalliques à haute pression et ceci malgré les fluctuations de la valeur de la tension du réseau dans les limites contractuelles, c'est-à-dire habituellement des fluctuations de quinze à vingt pour cent en valeurs relatives.

Ce basculement d'un mode à l'autre est dû au permutateur 54. Le changement de modes est illustré sur la Fig.3A.

Ceci montre clairement que la fonction de permutation entre régimes transitoire TR et permanent P assurée par le permutateur 54 est due, en période d'établissement à la diode Zenner Z_{O1}. Quand la diode Zenner Z_{O1} est bloquée on est en régime transitoire TR. Quand la diode Zenner Z_{O1} est débloquée on est en régime permanent P.

Le passage entre les deux régimes se situe au coude de la caractéristique de la diode Zenner Z_{O1}. La largeur de la plage de régulation (qui est très étroite) dépend du coude de la caractéristique de la diode Zenner Z_{O1} pour les résistances associées, et du gain du transistor T₈. Le point d'équilibre dépend des facteurs extérieurs tels la puissance de la lampe (en période de chauffage) et la tension du réseau. Il est aussi affecté par le coefficient de temporisation de la diode Zenner.

Le retour du permutateur 54 en régime transitoire TR n'est provoqué que par les sécurités 60 déclenchées par les perturbations:
1 - creux de tension supérieurs à 20 % et durant plus de 40 ms
2 - à-coups de tension supérieurs à 20 % avec un front de montée inférieur à 4 s.

Le permutateur 54 est donc dissymétrique. Le passage en régime de régulation s'effectue d'une manière continue. Le retour en régime transitoire de charge s'effectue brutalement aussitôt la survenance d'une perturbation.

Ceci tient à ce qu'on vise à ce moment la sécurité et non la performance.

Lorsque la tension U_{R}, image de la tension aux bornes du condensateur de stockage C_{S}, atteint une valeur définie par la diode Zener Z_{O1} et la position de calage du potentiomètre P_{O}, le transistor T₈ atteint un état de conduction créant un équilibre de la charge du condensateur C_{O2}. Ceci maintient la valeur de la tension du condensateur de stockage C_{S} à la valeur de consigne.

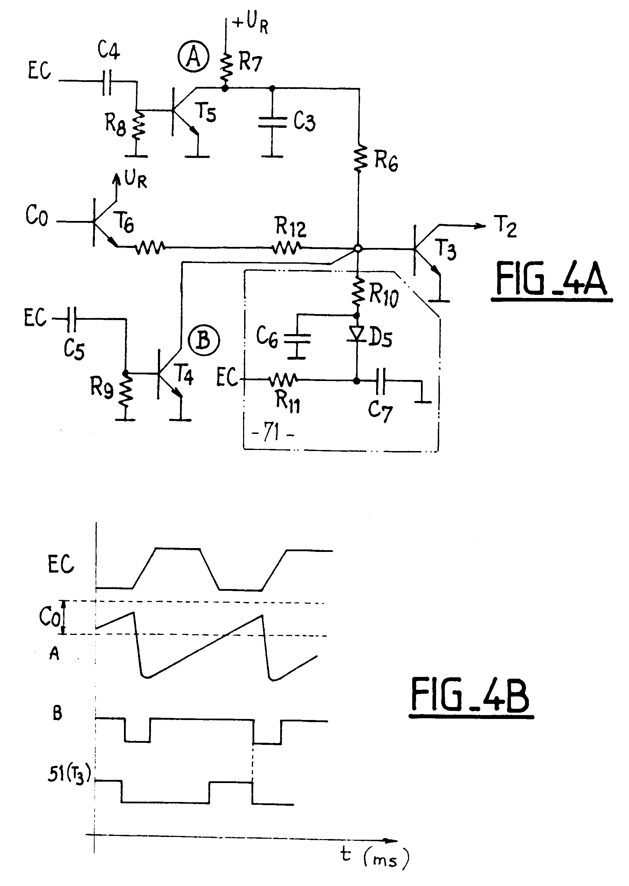

On se reportera à la Fig.4 où est illustré un schéma du circuit contre les transitoires de charge 71. La partie A de ce circuit établit une rampe qui détermine le début de l'ordre de conduction alors que la partie B de ce circuit établit la fin de l'ordre de conduction. Cette progression des signaux d'ordre de conduction est illustrée sur la Fig.4B.

Comme on l'observe, le transistor T₆ est monté en "émettodyne" de manière à adapter l'impédance du pilote 51, le transistor T3, et d'utiliser un circuit de constante de temps à haute impédance.

En outre, la somme des tensions des bases des transistors T₃ et T₆ crée un seuil que la tension du condensateur C_{O2} (Fig.3A) doit atteindre avant que le fonctionnement du régulateur 40_{R} commence; ceci a pour effet de retarder son démarrage assurant ainsi la fonction du temporisateur 51.

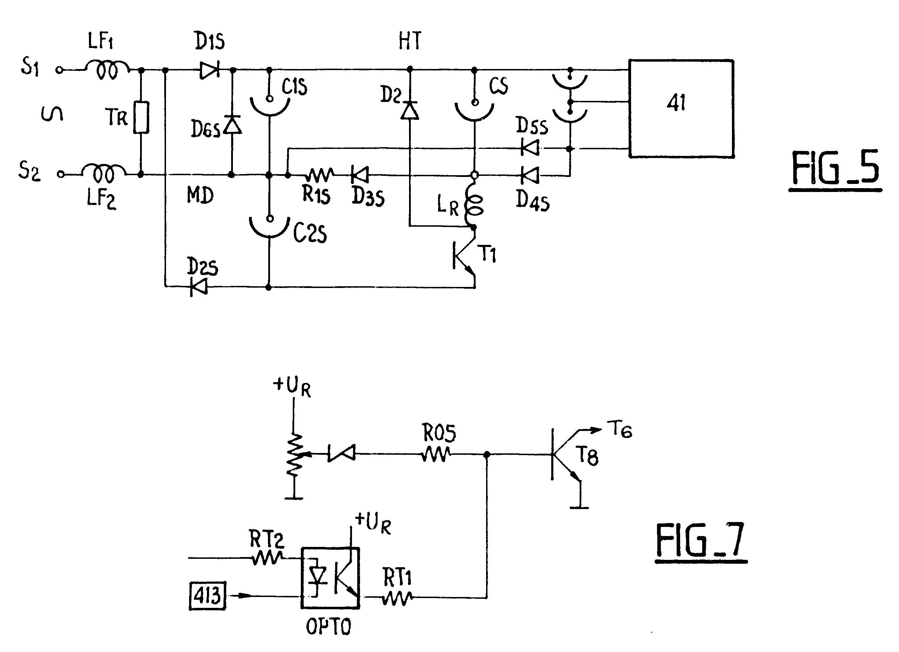

On se reportera maintenant à la Fig.5 où est illustré un schéma du circuit du démarreur 55 qui permet d'assurer le préchargement du condensateur de stockage C_{S}. On utilise un oscillateur 41 qu'il faut faire démarrer avant la constitution du stock de charge dans le condensateur de stockage C_{S}.

Ce circuit comprend les diodes D_{1S} et D_{2S} et les condensateurs C_{1S} et C_{2S} connectés comme représenté. Ces composants forment ainsi un doubleur de tension qui fait partie des auxiliaires placés en amont du limiteur 30.

A ce doubleur de tension sont associées les diodes D_{4S} et D_{5S} qui forment un commutateur à diodes.

Lors de la mise en service de cet oscillateur, ce dernier se trouve alimenté au travers du commutateur à diodes par la source MD-HT alors que le stock du condensateur C_{S} est encore nul ou très petit.

Un enroulement secondaire du transformateur T de l'oscillateur EC-MC (Fig.2) fournit la tension aux étages de calcul du programmateur.

L'étage de puissance du régulateur est progressivement mis en service pour alimenter le condensateur de stockage C_{S}.

Lorsque la tension du condensateur de stockage C_{S} est supérieure à la tension MD-HT, le commutateur à diodes alimente alors l'oscillateur 41 à partir du condensateur de stockage C_{S}.

Sur la Fig.5 on voit que la diode D_{5S} alimente l'oscillateur, en mode transitoire, pour le préchargement du condensateur C_{S} au travers de la diode D_{3S} et de la résistance R_{1S} et que la diode D_{4S} alimente cet oscillateur à partir du stock. La diode D_{6S} empêche l'inversion lors d'un arrêt. Lors d'une mise en service initiale, la tension du condensateur de stockage C_{S} est nulle et l'étage de puissance est au début du processus de fonctionnement; cet état est dangereux car en phase de basculement. Le courant ne s'annule pas dans la self-inductance L_{R} et peut diverger dans le collecteur du transistor T₁ jusqu'à dépasser la limite de sécurité, comme déjà indiqué.

Le démarreur 55 de préchargement permet de donner au condensateur de stockage C_{S} une charge initiale lors du début de fonctionnement du régulateur/-contrôleur et de son programmateur. On permet ainsi l'inversion dès la première alternance et on évite la divergence du courant de charge du condensateur C_{S}.

Sur cette figure, les selfs-inductances LF₁ et LF₂ associées au transistor assurent une protection contre les fronts d'onde raides et associées aux condensateurs C_{1S} et C_{2S} assurent le calage en phase.

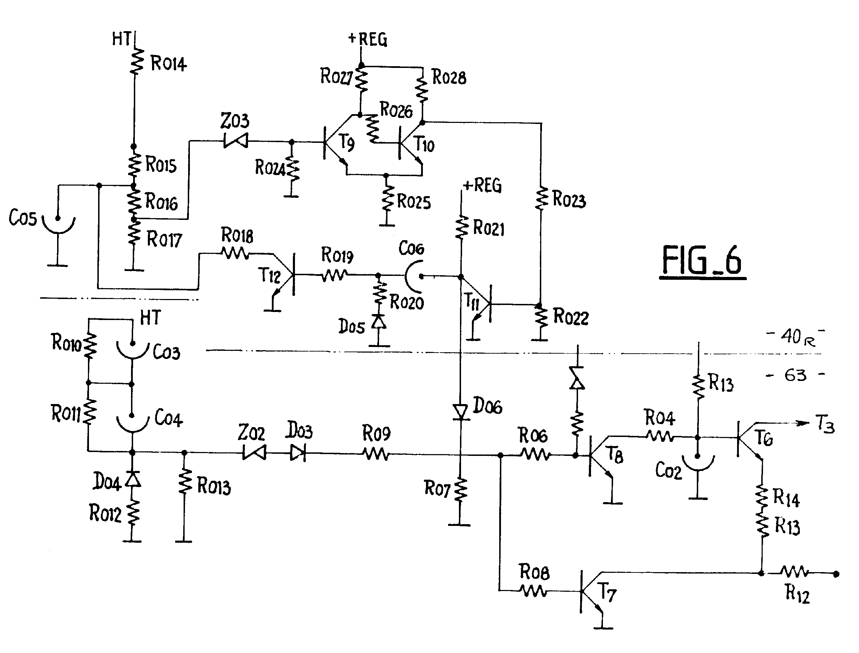

On se reportera aux circuits de la fig.6, où se trouvent illustrées les sécurités 60 qui agissent lors du démarrage ou lors de la reprise du fonctionnement.

Le processus de croissance progressive du courant de charge du condensateur de stockage C_{S} n'est autorisé que lorsque la tension du réseau atteint une valeur assignée U_{A} minimale. Cette valeur assignée minimale est donnée par la diode Zener Z_{O3}, le pont de résistances R_{O14} à R_{O17} et le calage des transistors T₉ et T₁₀ qui jouent le rôle de "trigger". Ceci constitue le circuit 61.

L'effet est retardé par le condensateur C_{O5} dont le rôle est explicité par la suite.

Ces sécurités comprennent aussi une protection contre les creux de tension; il s'agit du circuit 62. Lorsque la tension du réseau descend en-dessous d'un seuil déterminé inférieur à la valeur assignée précédente, un ordre de sécurité est émis vers les transistors T₇ et T₈. Cet ordre arrête le fonctionnement du régulateur pour éviter des opérations intempestives dans des zones de tension basses, relativement mal définies. Le décalage entre ces seuil et valeur résulte des transistors T₉ et T₁₀.

Lorsque cet ordre de sécurité est déclenché, il provoque par le circuit du transistor T₁₁, du condensateur C_{O6} et du transistor T₁₂ la remise à zéro du condensateur C_{O5} ; ceci confirme l'ordre de sécurité pendant une durée minimale, même en cas de coupure brève, pour éviter les effets de répétition par oscillation de la tension du réseau autour des deux seuil et valeur dont on vient de parler.

Pour tenir compte des à-coups, en particulier positifs, du réseau on utilise le circuit 63. Ce circuit comprend les condensateurs C_{O3}, C_{O4}, la diode D_{O4}, les résistances R_{O12} et R_{O13}, la diode Zener Z_{O2}, la diode D_{O3} et la résistance R_{O9}.

Lors d'un à-coups de tension dont la valeur est déterminée par la diode Zener Z_{O2}, le processus de sécurité est enclenché et arrête le régulateur pour rétablir graduellement le fonctionnement par réenclenchement ultérieur du processus.

La durée de persistance de cet ordre est limitée par la résistance R_{O13}.

Dans un tel cas, lorsque le front raide d'un à-coups succède à une coupure brève ou à un creux de tension bref, dont la durée est déterminée par la résistance R_{O12}, l'ordre de sécurité n'est pas enregistré ou pris en compte.

Ceci permet d'éviter une mise en oeuvre intempestive de la sécurité lors de perturbations n'ayant pas de conséquence pour l'installation.

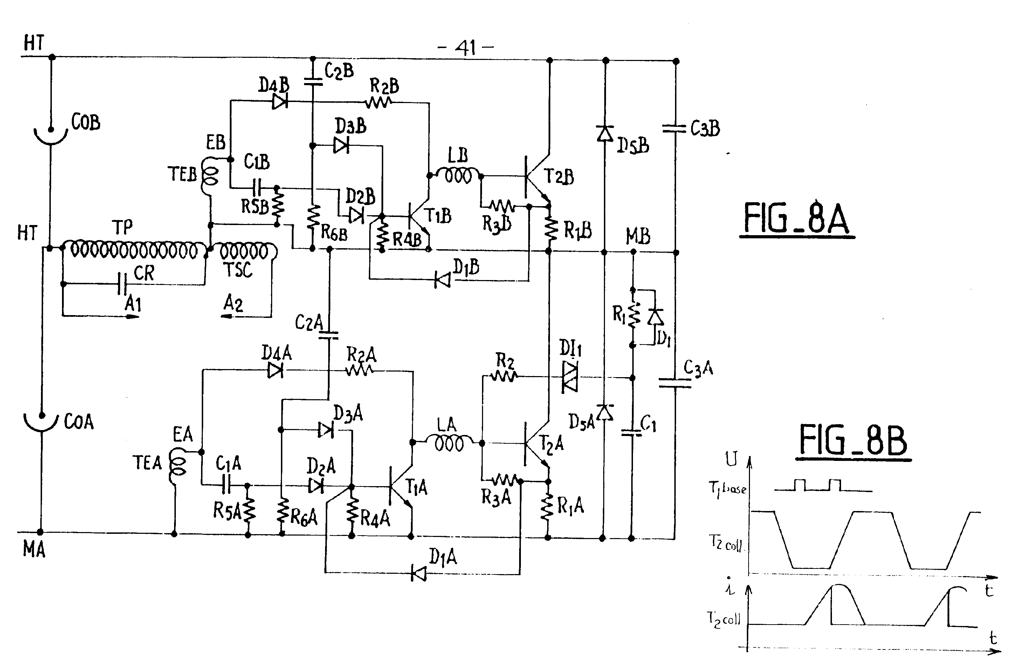

On se reportera maintenant à la Fig.7 où est illustré un schéma d'un circuit de télécommande 413 de la consigne C_{O} qui figure parmi les accessoires de l'oscillateur 41.

Cette télécommande 413 permet de maintenir à une valeur déterminée la source de l'oscillateur. Ce circuit comprend un coupleur optoélectrique OPTO et des résistances R_{T1} et R_{T2}.

Le courant injecté dans la ligne de télécommande induit un courant au secondaire du coupleur optoélectrique qui se substitue partiellement au courant de consigne qui traverse la résistance R_{O5}. Ceci produit un nouvel équilibre du régulateur à une valeur de tension de source inférieure à la valeur précédente.

On peut ainsi abaisser d'une valeur convenue la puissance dissipée dans le circuit de l'installation par exemple une lampe d'éclairage à vapeurs métalliques sous haute pression pour réduire le flux lumineux qu'elle émet.

On se reportera maintenant au schéma de circuit de la Fig.8A où se trouve illustré un mode de réalisation de l'oscillateur 41 et de ses accessoires.

Cet oscillateur est du type push-pull série. On assure une aide à la commutation aussi bien au début qu'à la fin.

Pour ce faire, on utilise soit en début, d'une part, le condensateur C₁, la résistance R_{5A}, la diode D_{2A} et le condensateur C_{1B}, la résistance R_{5B}, la diode T_{2B}, soit en fin, d'autre part, le condensateur C_{2A}, la résistance R_{6A}, la diode D_{5A} et le condensateur C_{2B}, la résistance R_{6B}, la diode D_{5B}.

Comme présenté sur la Fig.8B en début de commutation le signal trapézoïdal venant des enroulements de polarisation TEA et TEB est dérivé par les condensateurs C_{1A} ou C_{1B} et assure pendant la rampe ascendante le débloquage du transistor "driver" empêchant les transistors de puissance T_{2A} ou T_{2B} de devenir conducteur avant que le signal au collecteur soit revenu à zéro.

En fin de commutation le signal trapézoïdal entre collecteur et émetteur est dérivé par les condensateurs C_{2A} ou C_{2B} de manière à maintenir le débloquage du transistor "driver" pendant la rampe positive ascendante, confirmant le bloquage des transistors de puissance.

Grâce à un tel montage on peut réduire au minimum l'échauffement des transistors de puissance et on peut soutirer de l'oscillateur la puissance maximale permise par les caractéristiques des composants.

Dans ce circuit, le contrôle du courant est obtenu par les composants R_{1A}, D_{1A}, R_{1B}, D_{1B}. La polarisation résulte des composants D_{5A}, R_{2A}, D_{5B}, R_{2B}. La vidange des transistors est opérée par les composants L_{A}, R_{3A}, L_{B}, R_{3B}. Le signal trapézoïdal est engendré par les composants C_{R}, C_{3A} et C_{3B}. Les composants R₁, C₁, D₁ et R₂ servent de "starter" et la diode D₁ d'arrêt de "starter" ; les diodes D_{4A} et D₄ permettent le basculement.

En se reportant au même schéma on voit le circuit du lanceur 411 que l'on utilise pour le départ de l'oscillateur 41.

Ce lanceur comprend la résistance R₁, la diode D₁, le condensateur C₁, la résistance R₂ et le diac D_{I1}.

La relaxation de l'oscillateur est déclenchée par une impulsion initiale délivrée par le diac.

Le choix de la constante de temps R1C1, choisie de l'ordre de 200 ms, permet de déclencher le fonctionnement de l'oscillateur après amortissment des perturbations transitoires causées à la mise sous tension du doubleur de tension; ces perturbations sont créées par des oscilations parasites entre les self-inductances de protection, à l'entrée, et les condensateurs de filtrage. La diode D₁ arrête le fonctionnement du lanceur dès le démarrage de l'oscillateur.

On décrira maintenant les auxiliaires 70 associés à l'installation 10.

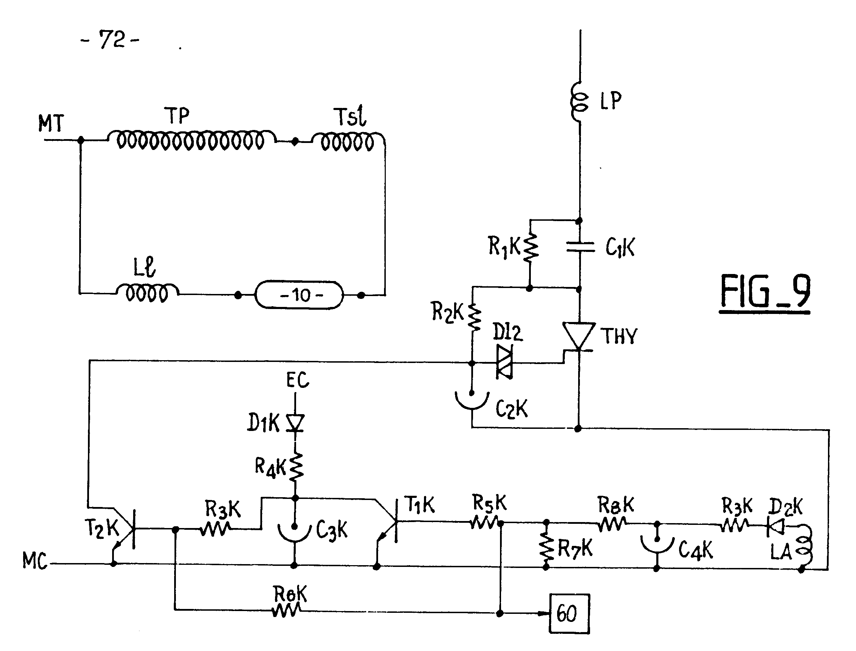

On se reportera aux circuits dont le schéma est illustré sur la Fig.4A et la Fig.9.

On suppose que l'installation 10 est au moins une lampe à décharge à vapeurs métalliques sous haute pression.

Si cette lampe vient à défaillir, il s'agit de tenir compte de cette défaillance. Pour ce faire on utilise un circuit 71 (Fig.4A) qui comprend le condensateur C₇, la résistance R₁₁, la diode D5, le condensateur C₆ et la résistance R₁₀. Lorsqu'une lampe arrive en fin de vie, ou en cas de manoeuvre accidentelle, il peut se produire une rupture soudaine de la charge de l'oscillateur; ceci entraîne brusquement une baisse de sa fréquence c'est-à-dire une augmentation corrélative de la durée de conduction au niveau du pilote 51, le transistor T₃. Ceci peut provoquer un fonctionnement de l'étage de puissance hors des limites de sécurité avant que la chaîne normale de l'adaptation, par les transistors T₇ et T₈, ait eu le temps de réagir efficacement.

L'accroîssement de la période de l'oscillateur produit sans retard une augmentation de la tension de crête du condensateur C₇ ; ceci crée une augmentation du signal négatif détecté par le détecteur de crète que forment les composants D₅, C₆. Ceci a pour conséquence de diminuer immédiatement la durée de conduction tout en maintenant l'étage de puissance dans les limites de sécurité.

On se reportera maintenant à la Fig.9 où l'on a illustré le circuit d'un amorceur 72 permettant le démarrage d'une installation constituée par exemple de lampes à vapeurs de sodium sous haute pression.

La self-inductance LH de la lampe est munie d'un enroulement supplémentaire LP dans lequel se décharge un condensateur C1K à l'aide d'un thyristor THY. Ce thyristor est lui même piloté par un diac DI₂ alimenté par le circuit des composants R_{2K}, C_{2K}. La constante de temps est choisie de telle sorte que la lampe ne reçoive la première impulsion d'amorçage qu'après la mise en régime de l'oscillateur, c'est-à-dire une durée d'environ une demi-seconde.

La self-inductance L₁ a une de ses bornes raccordées au point milieu des condensateurs C_{OA} et C_{OB} qui constituent la source de l'oscillateur de telle sorte que l'impulsion d'amorçage se propage dans la self L₁ et se développe sur une basse impédance pour éviter la propagation d'une impulsion à front raide à travers les enroulements du transformateur. Un troisième enroulement L_{A} de la self-inductance permet d'obtenir un signal après amorçage de la lampe par passage du courant alterné dans la self.

Le circuit constituée par les composants D_{1K}, D_{2K}, R_{3K} à R_{5K}, C_{3K}, C_{4K}, T_{1K}, T_{2K} permet d'obtenir l'algorithme de fonctionnement d'amorçage suivant.

Aussitôt que la lampe est amorcée, les impulsions d'amorçage sont arrêtées; si la lampe ne s'allume pas aux toutes premières impulsions, les impulsions sont maintenues pendant une durée fixée, correspondant aux possibilités d'amorçage d'une lampe chaude soit environ une minute, puis ces impulsions cessent pour éviter une fatigue des isolants des câbles et autres parties du circuit de la lampe.

Cette temporisation de l'aide à l'amorçage est redéclenchée dès l'amorçage de la lampe pour permettre les tentatives nécessaires lorsque l'alimentation est effectuée en plusieurs fois.

Dans ce circuit les composants R_{2K}, C_{2B} fixent la durée d'amorçage initial et les composants R_{4K}, C_{3K} la durée d'amorçage à chaud. Les composants R_{3K}, R_{6K} et T_{2K} provoquent l'arrêt de l'amorçage. Les composants R_{5K} et T_{1K} déterminent la temporisation. Le filtrage du courant résulte des composants R_{4K}, C_{3K}, R_{3K}, C_{4K}, R_{8K} et R_{7K}.

On comprend tous les avantages et intérêts de l'invention notamment dans son application à l'alimentation de lampes à décharge à vapeurs métalliques sous haute pression. Elle permet de s'affranchir des fluctuations et interruptions relativement brèves du réseau de distribution.

## Revendications

1. Dispositif pour alimenter une installation électrique (10) en s'affranchissant d'anomalies telles des sautes ou coupures de tension relativement brève du réseau (20) de distribution électrique, lequel dispositif est intercalé en permanence entre réseau et installation, qui comprend au moins
un condensateur de stockage (C_{S}),
un limiteur de courant de charge (30) du condensateur de stockage qui est constitué, entre autres, d'une self-inductance (L_{R}) et d'un commutateur (T₁) qui sont connectés en série avec le condensateur de stockage (C_{S}) et d'une diode de retournement (D₂) qui est connectée en parallèle sur le condensateur de stockage (C_{S}) et la self-inductance (L_{R}) et lequel limiteur agit sur le courant de charge du condensateur de stockage (C_{S}) en modulant la durée de conduction du commutateur (T₁) d'une manière réglable périodique,
caractérisé en ce qu'il comprend aussi
une entité (40) régulateur (40_{R}) / contrôleur (40_{C}) commandant le commutateur (T₁) pour soit, selon un mode transitoire (TR), assigner une loi d'évolution déterminée au courant de charge du condensateur de stockage (C_{S}) pour lui faire atteindre une charge au moins égale à une valeur de service (U_{S}) à partir d'une valeur assignée (U_{A}) soit, selon un mode permanent (P), pour surveiller la tension du condensateur de stockage (C_{S}) afin de la maintenir au voisinage d'un seuil déterminé indépendamment de la tension du réseau,
un programmateur (50) avec un pilote (51) pour opérer sur le régulateur / contrôleur à l'aide d'une valeur de consigne (C_{O}),
un élaborateur (52) de cette loi pour qu'elle suive une croissance graduelle compatible avec les aptitudes du réseau et du commutateur,
un temporisateur (53) agissant sur la valeur de consigne (C_{O}) pour que cette loi de croissance graduelle ne soit appliquée que lorsque le condensateur de stockage (C_{S}) a atteint une précharge minimale fixée au moins égale à cette valeur assignée (U_{A}) après une mise en service initiale ou une reprise de fonctionnement normal à la suite d'une anomalie,
un permutateur (54) pour faire basculer le régulateur / contrôleur de son mode transitoire (TR) à son mode permanent (P) en agissant sur la valeur de consigne (C_{O}) lorsque la charge du condensateur de stockage a atteint la valeur de service (U_{S}) fixée pour la maintenir au voisinage du seuil déterminé et
un démarreur (55) pour lancer le fonctionnement du régulateur / contrôleur lors d'une mise en service initiale ou d'une reprise de fonctionnement normal à la suite d'une anomalie alors que la charge du condensateur de stockage (C_{S}) est pratiquement nulle.

2. Dispositif selon la revendication 1, caractérisé en ce que l'entité (40) régulateur / controlleur comprend un oscillateur (41) avec son alimentation, en ce que le démarreur (55) est un commutateur à diodes intercalé entre l'oscillateur (41) et le condensateur de stockage (C_{S}).

3. Dispositif selon la revendication 1 ou 2 où le limiteur (30) est précédé d'un circuit (70) pont redresseur - filtrage et doubleur de tension, caractérisé en ce que le démarreur (55) est relié au doubleur de tension.

4. Dispositif selon la revendication 3, caractérisé en ce que le temporisateur (53) est intercalé entre le condensateur de stockage (C_{S}) et le doubleur de tension (70).

5. Dispositif selon l'une quelconque des revendications 1 à 4, caractérisé en ce qu'il comprend des sécurités (60) pour observer la tension du réseau (20) et agissant sur la valeur de consigne (C_{O}) suivant la tension de démarrage (61), les creux de tension (62) et les à-coups (63) de cette dernière.

6. Application d'un dispositif conforme à l'une quelconque des revendications 1 à 5 aux lampes d'éclairage à vapeurs métalliques sous haute pression.

7. Application selon la revendication 6 où on utilise un circuit auxiliaire (71) pour la détection d'une défaillance d'une lampe.

8. Application selon la revendication 6 ou 7 caractérisée en ce qu'on utilise un circuit auxiliaire (72) pour l'amorçage de la lampe.

9. Procédé pour alimenter une installation électrique en s'affranchissant d'anomalies telles des sautes ou coupures de tension relativement brèves du réseau de distribution électrique où l'on intercale en permanence entre réseau et installation au moins un condensateur de stockage (C_{S}) et un limiteur de courant de charge (30) du condensateur de stockage constitué, entre autres, d'une self-inductance (L_{R}), d'un commutateur (T₁) connectés en série avec le condensateur de stockage et une diode de retournement (D₂) connectée en parallèle sur le condensateur de stockage et la self-inductance et où l'on agit sur le courant de charge du condensateur de stockage en modulant la durée de conduction du commutateur d'une manière réglable périodique caractérisé en ce qu'on utilise un régulateur (40_{R}) / contrôleur (40_{C}) pour commander le commutateur soit, selon un mode transitoire (TR), afin d'assigner une loi d'évolution déterminée au courant de charge du condensateur de stockage pour lui faire atteindre une charge au moins égale à une valeur de service (U_{S}) à partir d'une valeur assignée (U_{A}) soit, selon un mode permanent (P), pour surveiller la tension
du condensateur de stockage afin de la maintenir au voisinage d'un seuil déterminé indépendamment du réseau, en ce qu'on utilise un programmateur (50) qui est piloté pour opérer sur le régulateur / contrôleur à l'aide d'une valeur de consigne (C_{O}) pour que cette loi soit une croissance graduelle compatible avec les aptitudes du réseau et du commutateur, en ce qu'on temporise en agissant sur la valeur de consigne (C_{O}) pour que cette loi de croissance graduelle ne soit appliquée que lorsque le condensateur de stockage a atteint une précharge minimale fixée au moins égale à cette valeur assignée après une mise en service initiale ou une reprise de fonctionnement normal à la suite d'une anomalie, en ce qu'on permute le régulateur / contrôleur de son mode transitoire à son mode permanent en agissant sur la valeur de consigne (C_{O}) lorsque la charge du condensateur de stockage a atteint une valeur de service (U_{S}) fixée pour la maintenir au voisinage de ce seuil déterminé et en ce qu'on fait démarrer le fonctionnement du régulateur / contrôleur lors d'une mise en service initiale ou d'une reprise de fonctionnement normal à la suite d'une anomalie alors que la charge du condensateur de stockage est pratiquement nulle.

## Claims

1. A device for feeding an electrical installation (10) while overcoming the constraints of anomalies such as relatively short voltage surges or cut-offs of the electric mains (20), which device is permanently interposed between the mains and the installation, which includes at least:
one storage capacitor (C_{S})
one limiter (30) of the charging current for the storage capacitor constituted inter alia by a self-inductance coil (L_{R}) and a switch (T₁) which are connected in series to the storage capacitor (C_{S}) and by a reversing diode (D₂) which is connected in parallel to the storage capacitor (C_{S}) and the self-inductance coil (L_{R}), and which limiter acts on the current for charging the storage capacitor (C_{S}) by modulating the conduction period of the switch (T₁) in a periodically adjustable way,
characterized in that it also includes:
a regulator (40_{R})/controller (40_{C}) unit (40) controlling the switch (T₁) for assigning, either according to a transitory mode (TR), a specified evolution formula to the charging current of the storage capacitor (C_{S}) to cause it to reach a charge at least equal to a service value (U_{S}) on the basis of an assigned value (U_{A}), or according to a permanent mode (P) to monitor the voltage of the storage capacitor (C_{S}) so as to maintain it near a threshold determined independently of the voltage of the mains,
a programmer (50) with a pilot (51) for acting on the regulator/controller by means of a set point value (C_{O}),
a unit (52) for elaborating this formula so that it follows a gradual growth compatible with the capabilities of the mains and of the switch,
a timer (53) acting on the set point value (C_{O}), so that this gradual growth formula should only be applied when the storage capacitor (C_{S}) has reached a fixed minimum precharge at least equal to this assigned value (U_{A}) after an initial starting up or resumption of normal operation following an anomaly,
a change-over switch (54) to cause the regulator/controller to change over from its transitory mode (TR) to its permanent mode by acting on the set point value (C_{O}) when the charge of the storage capacitor has reached the service value (U_{S}) fixed for maintaining it near the determined threshold and
a starter (55) for starting the operation of the regulator/controller during an initial starting up or resumption of normal operation following an anomaly when the charge of the storage capacitor (C_{S}) is practically zero.

2. A device according to claim 1, characterized in that the regulator/controller unit (40) includes an oscillator (41) with its power supply, in that the starter (55) is a switch with diodes interposed between the oscillator (41) and the storage capacitor (C_{S}).

3. A device according to claim 1 or 2, where the limiter (30) is preceded by a bridge rectifier-filter and voltage doubler circuit (70), characterized in that the starter (55) is connected to the voltage doubler.

4. A device according to claim 3, characterized in that the timer (53) is interposed between the storage capacitor (C_{S}) and the voltage doubler (70).

5. A device according to any one of claims 1 to 4, characterized in that it includes protective means (60) for monitoring the voltage of the mains (20) and acting on the set point value (C_{O}) according to the starting voltage (61), the voltage troughs (62) and surges (63) of the latter.

6. Application of a device in accordance with any one of claims 1 to 5 to high-pressure metallic vapour lighting lamps.

7. Application according to claim 6 where an auxiliary circuit (71) is used for the detection of a failure of a lamp.

8. Application according to claim 6 or 7, characterized in that an auxiliary circuit is used for the starting of the lamp.

9. A method for feeding an electrical installation while overcoming the constraints of anomalies such as relatively short voltage surges or cut-offs of the electric mains, where one permanently interposes between the mains and the installation at least one storage capacitor (CS) and one limiter (30) of the charging current for the storage capacitor, constituted inter alia by a self-inductance coil (L_{R}), by a switch (T₁) connected in series to the storage capacitor, and a reversing diode (D₂) connected in parallel to the storage capacitor and the self-inductance coil, and where one acts on the charging current of the storage capacitor by modulating the conduction period of the switch in a periodically adjustable way, characterized in that one uses a regulator (40_{R})/controller (40_{C}) for controlling the switch either, according to a transitory mode (TR) so as to assign a specified evolution formula to the charging current of the storage capacitor to cause it to reach a charge at least equal to a service value (U_{S}) on the basis of an assigned value (U_{A}) or, according to a permanent mode (P), to monitor the voltage of the storage capacitor so as to maintain it near a threshold determined independently of the mains, in that a programmer (50) is used which is guided for acting on the regulator/controller by means of a set point value (C_{O}), so that this formula should represent a gradual growth compatible with the capabilities of the mains supply system and of the switch, in that the timing is set by acting on the set point value (C_{O}), so that this gradual growth formula should only be applied when the storage capacitor has reached a fixed minimum precharge at least equal to this assigned value after an initial starting up or resumption of normal operation following an anomaly, in that the regulator/controller is changed over from its transient mode to its permanent mode by acting on the set point value (C_{O}) when the charge of the storage capacitor has reached a service value (U_{S}) fixed for maintaining it near this determined threshold, and in that the operation of the regulator/controller is started during an initial starting up or resumption of normal operation following lowing an anomaly when the charge of the storage capacitor (C_{S}) is practically zero.

## Patentansprüche

1. Vorrichtung zum Speisen einer elektrischen Einrichtung (10) unter Freimachung von Anomalien wie verhältnismäßig kurzen Spannungssprüngen oder -unterbrechungen des elektrischen Netzes (20), wobei diese Vorrichtung permanent zwischen Netz und Einrichtung zwischengeschaltet ist und wenigtens
einen Speicherkondensator (C_{S}),
einen Ladestrombegrenzer (30) für den Speicherkondensator, welcher unter anderem aus einer Selbstinduktion (L_{R}) und einem Schalter (T₁), die mit dem Speicherkondensator (C_{S}) in Reihe geschaltet sind, und einer Umkehrdiode (D₂), die parallel zum Speicherkondensator (C_{S}) und zu der Selbstinduktion (L_{R}) angeschlossen ist und auf den Ladestrom des Speicherkondensators (C_{S}) einwirkt, indem sie die Leitdauer des Schalters (T₁) in einer periodischen regulierbaren Weise moduliert, aufgebaut ist, aufweist,
dadurch gekennzeichnet, daß sie ferner
eine Regelungs-(40_{R})/Steuerungs(40_{C})-Einheit (40), welche den Schalter (T₁) so betätigt, daß entweder, gemäß einer Übergangsbetriebsart (TR), dem Ladestrom des Speicherkondensators (C_{S}) ein bestimmter Entwicklungsverlauf zugeordnet wird, der ihn ausgehend von einem zugeordneten Wert (U_{A}) eine Ladung erreichen läßt, die wenigstens gleich einem Betriebswert (U_{S}) ist, oder daß, gemäß einer Dauerbetriebsart (P), die Spannung des Speicherkondensators (C_{S}) so überwacht wird, daß sie im Bereich einer bestimmten Schwelle unabhängig von der Netzspannung gehalten wird,
ein Programmsteuergerät (50) mit einem Pilot (51) zum Einwirken auf die Regelung/Steuerung mittels eines Einstellwerts (C_{O}),
eine Ausarbeitungseinheit (52) für diesen Verlauf so, daß er einem mit den Eignungen des Netzes und des Schalters verträglichen allmählichen Anwachsen folgt,
eine Verzögerer (53), der auf den Einstellwert (C_{O}) so einwirkt, daß der allmählich anwachsende Verlauf erst aufgegeben wird, wenn der Speicherkondensator (C_{S}) nach einer Anfangsinbetriebnahme oder Wiederaufnahme eines Normalbetriebs nach einer Anomalie eine feste minimale Voraufladung, die wenigstens gleich dem zugeordneten Wert (U_{A}) ist, erreicht hat,
einen Umschalter (54), der die Regelung/Steuerung aus ihrer Übergangsbetriebsart (TR) in ihre Dauerbetriebsart (P) durch Einwirken auf den Einstellwert (C_{O}) kippen läßt, wenn die Ladung des Speicherkondensators den festgesetzten Betriebswert (U_{S}) erreicht hat, um ihn im Bereich der bestimmten Schwelle zu halten, und
eine Starter (55) zum Auslösen des Arbeitens der Regelung/Steuerung bei einer Anfangsinbetriebnahme oder einer Wiederaufnahme des Normalbetriebs nach einer Anomalie, während die Ladung des Speicherkondensators (C_{S}) praktisch Null ist, aufweist.

2. Vorrichtung nach Anspruch 1, dadurch gekennzeichnet, daß die Regelung-/Steuerungs-Einheit (40) einen Oszillator (41) mit seiner Speisung aufweist, daß der Starter (55) ein Diodenschalter ist, der zwischen dem Oszillator (41) und dem Speicherkondensator (C_{S}) zwischengeschaltet ist.

3. Vorrichtung nach Anspruch 1 oder 2, wobei dem Begrenzer (30) eine Gleichrichterbrücken-, Filter- und Spannungsverdopplerschaltung (70) vorgeschaltet ist, dadurch gekennzeichnet, daß der Starter (55) mit dem Spannungsverdoppler verbunden ist.

4. Vorrichtung nach Anspruch 3, dadurch gekennzeichnet, daß der Verzögerer (53) zwischen dem Speicherkondensator (C_{S}) und dem Spannungsverdoppler (70) zwischengeschaltet ist.

5. Vorrichtung nach irgendeinem der Ansprüche 1 bis 4, dadurch gekennzeichnet, daß sie Sicherheitseinrichtungen (60) zur Überwachung der Netzspannung (20) aufweist, die auf den Einstellwert (C_{O}) gemäß der Starterspannung (61), den Spannungseinsenkungen (62) und den Stößen (63) derselben einwirken.

6. Verwendung einer Vorrichtung nach irgendeinem der Ansprüche 1 bis 5 bei Hochdruck-Metalldampflampen.

7. Verwendung gemäß Anspruch 6, wobei eine Hilfsschaltung (71) zur Feststellung des Ausfalls einer Lampe verwendet wird.

8. Verwendung nach Anspruch 6 oder 7, dadurch gekennzeichnet, daß eine Hilfsschaltung (72) zum Zünden der Lampe verwendet wird.

9. Verfahren zur Speisung einer elektrischen Einrichtung unter Freimachung von Anomalien, wie verhältnismäßig kurzen Spannungssprüngen oder -unterbrechungen des elektrischen Netzes, wozu man zwischen dem Netz und der Einrichtung wenigstens einen Speicherkondensator (C_{S}) und einen Ladungsstrombegrenzer (30) für den Speicherkondensator, der unter anderem aus einer Selbstinduktion (L_{R}), einem Schalter (T₁), die mit dem Speicherkondensator in Reihe geschaltet sind, und einer zu dem Speicherkondensator und der Selbstinduktion parallel geschalteten Umkehrdiode (D₂) gebildet ist, permanent zwischenschaltet, und wozu man auf den Ladestrom für den Speicherkondensator einwirkt, indem man die Leitdauer des Schalters in einer einstellbaren periodischen Weise moduliert, dadurch gekennzeichnet, daß man eine Regelung(40R)/Steuerung(40C) zur Betätigung des Schalters entweder, gemäß einer Übergangsbetriebsart (TR), so, daß dem Ladestrom für den Speicherkondensator ein bestimmter Entwicklungsverlauf zugeordnet wird, der ihn ausgehend von einem zugeordneten Werten (U_{A}) eine Ladung erreichen läßt, die wenigstens gleich einem Betriebswert (U_{S}) ist, oder, gemäß einer Dauerbetriebsart (P), so, daß die Spannung des Speicherkondensators so überwacht wird, daß diese im Bereich einer bestimmte Schwelle unabhängig vom Netz gehalten wird, daß man ein pilotiertes Programmsteuergerät (50) verwendet, um auf die Regelung/Steuerung mittels eines Einstellwerts (C_{O}) so einzuwirken, daß dieser Verlauf ein allmähliches anwachsen ist, das mit den Eignungen des Netzes und des Schalters verträglich ist, daß man durch Einwirken auf den Einstellwert (C_{O}) verzögert, damit der allmählich anwachsende Verlauf erst aufgegeben wird, wenn der Speicherkondensator eine feste minimale Voraufladung, die wenigstens gleich dem zugeordneten Wert ist, nach einer Anfangsinbetriebnahme oder nach einer Wiederaufnahme des Normalbetriebs nach einer Anomalie erreicht hat, daß man die Regelung/Steuerung aus ihrer Übergangsbetriebsart in ihre Dauerbetriebsart umschaltet, indem man auf den Einstellwert (C_{O}) einwirkt, wenn die Ladung des Speicherkondensators einen festen Betriebswert (U_{S}) erreicht hat, um sie im Bereich der vorgegebenen Schwelle zu halten, und daß man das Arbeiten der Regelung/Steuerung bei einer Anfangsinbetriebnahme oder einer Wiederaufnahme des Normalbetriebs nach einer Anomalie startet, während die Ladung des Speicherkondensators praktisch null ist.
